(19) Europäisches Patentamt
European Patent Office
Office européen des brevets

(11) EP 2 484 826 A1

(12) EUROPEAN PATENT APPLICATION

(43) Date of publication:
08.08.2012 Bulletin 2012/32

(51) Int Cl.:
D04H 1/54 (2012.01)  D04H 1/541 (2012.01)

(21) Application number: 11190456.1

(22) Date of filing: 24.11.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 03.02.2011 JP 2011022084

(71) Applicant: Hirotani Co., Ltd.
Higashi-Hiroshima-shi, Hiroshima 739-0269 (JP)

(72) Inventors:
• Honda, Soichiro
Higashi-Hiroshima-shi, Hiroshima 739-0269 (JP)
• Teshima, Hiroaki
Higashi-Hiroshima-shi, Hiroshima 739-0269 (JP)
• Kajiwara, Yuhei
Higashi-Hiroshima-shi, Hiroshima 739-0269 (JP)

(74) Representative: BRP Renaud & Partner
Rechtsanwälte Notare Patentanwälte
Königstrasse 28
70173 Stuttgart (DE)

(54) Sound insulation material for vehicle and method for forming the same

(57) A lightweight sound insulation material (10) with improved sound absorption performance and sound insulation performance and a method for forming the sound insulation material are provided. A high-density air-permeability adjustment film (12) is formed by heating and pressurizing at least a surface of a nonwoven fabric (11) including microfibers and thermal adhesive fibers. The air-permeability adjustment film (12) is made of the same material as a base material (11), and a two-layer structure including the air-permeability adjustment film (12) and the base material (11) is obtained. Thus, it is possible to improve both sound absorption performance and sound insulation performance, while achieving weight reduction.

FIG.1A

(Cont. next page)

EP 2 484 826 A1

# FIG.1B

**Description**

BACKGROUND

The present disclosure relates to lightweight sound insulation materials for vehicles with improved sound absorption performance and improved sound insulation performance and methods for forming the materials, and more particularly to a sound insulation material suitable for a dash insulator and a method for forming the sound insulation material.

In general, the sound level in a cabin is greatly affected by noise such as engine noise, suction/exhaust noise, road noise, wind noise, and muffled noise due to engine vibration or torque variation. Transmission paths for noise are most influenced by noise transmitted from the engine or a partition (a dash panel) in the cabin. The percentage of the influence of this transmitted noise is assumed to be 50% or more of the overall noise.

In view of this, attempts have been made to improve sound deadening performance (i.e., sound absorption and sound insulation) of parts serving as noise transmission paths which are the most important parts in reducing the sound level in the cabin. Sound deadening performance herein includes both sound absorption performance and sound insulation performance, and a member exhibiting sound deadening performance will be referred to as a sound insulation material.

It has been required for vehicle sound insulation materials to be lightweight in order to achieve weight reduction of vehicle bodies in consideration of environmental issues and reduction of energy consumption, as well as to improve sound absorption performance and sound insulation performance. To meet these requirements, short-fiber nonwoven fabric has been widely used as sound absorbers in recent years. To improve sound absorption performance, techniques such as the technique of reducing the fiber diameter in order to increase resistance to air permeation or increasing the fabric weight (i.e., a weight per unit area of textile fabric or knitted fabric; the weight per 1 $m^2$ is represented by g (gram)) have been employed. As a result, in the case of requiring improved sound absorption performance, fibers having relatively small diameters of about 15 $\mu$m are used, and a thick and heavy short-fiber nonwoven fabric having a fabric weight of 1000 to 5000 $g/m^2$ is used. In particular, as shown in PATENT DOCUMENT 1, a nonwoven fabric including microfibers has excellent properties such as excellent sound absorption performance and excellent filter performance, and is employed in many applications. However, an exclusive use of the nonwoven fabric including microfibers has problems such as a decrease in intensity and degradation of form stability. Further, although an increase in thickness of the nonwoven fabric enhances sound insulation performance, this enhancement has a limitation in terms of layout, and the thickness of the nonwoven fabric cannot be increased so much in view of weight reduction.

To solve these problems, it is known that another material, such as a synthetic resin film or another nonwoven fabric, is laminated as a film material on the nonwoven fabric including microfibers to form a composite material (see, for example, PATENT DOCUMENTS 2 and 3). In this case, as a technique for the lamination, the technique of applying a resin to be a binder with spraying or transferring or a technique using a thermal adhesive fiber, for example, can be employed.

These techniques, however, need heat treatment for drying or fusion adhesion of resin, and are not preferable in view of environmental contamination and energy saving. In addition, the techniques have a problem in which a binder resin forms a coating at the interface between nonwoven fabrics to cause degradation of sound absorption performance.

On the other hand, in an example known technique for laminating and integrating a microfiber nonwoven fabric and a long-fiber nonwoven fabric, a meltblown nonwoven fabric of microfibers is sandwiched between spunbonded nonwoven fabrics, and these fabrics are bonded together by hot embossing. This technique is generally known as an S (spunbond) / M (meltblow) / S (spunbond) technique.

These nonwoven fabrics, however, have a problem of limited applications because of an insufficient volume and hardness thereof.

CITATION LIST

PATENT DOCUMENT

PATENT DOCUMENT 1: Japanese Patent Publication No. 2009-287143
PATENT DOCUMENT 2: Japanese Patent No. 3705419
PATENT DOCUMENT 3: Japanese Patent Publication No. 2008-290642

SUMMARY

In the conventional techniques described above, a nonwoven fabric including microfibers and another film material (where every type of a high-density member to be laminated on the nonwoven fabric including microfibers, e.g., a resin film or another nonwoven fabric, is herein referred to as a "film material") are bonded together in order to improve both sound absorption performance and sound insulation performance. Accordingly, the conventional techniques disadvantageously need additional processes such as a bonding process using an adhesive for bonding. Further, in consideration of adhesion between the microfibers and the film material to be adhered to the nonwoven fabric, formability, weight reduction, and other factors, only limited materials can be used as the film material to be adhered, and thus, not both of sound absorption performance and sound insulation performance can be improved with the conventional techniques.

It is therefore an object of the present disclosure to provide a lightweight sound insulation material with improved sound absorption performance and improved sound insulation performance, and a method for forming such a sound insulation material.

A sound insulation material (10) for a vehicle in a first aspect of the present disclosure includes: a base material (11) of fibers including microfibers; and an air-permeability adjustment film (12) obtained by heating and compressing at least a surface of the base material (11). In the first aspect, with respect to the entire fibers, the fibers include 40 to 75 weight percent (wt. %) of fibers A containing microfibers having a fineness of 0.1 to 1.0 dtex as a main component and 15 to 60 wt. % of fibers B containing thermal adhesive fibers having a fineness of 1.2 to 5.0 dtex as a main component, and the fibers are a mixture including the fibers A and the fibers B.

In a sound insulation material (10) for a vehicle in a second aspect of the present disclosure, the air-permeability adjustment film (12) has a fabric weight of 50 to 200 $g/m^2$ in the sound insulation material (10) of the first aspect.

In a sound insulation material (10) for a vehicle in a third aspect of the present disclosure, the sound insulation material (10) has a fabric weight of 800 to 2400 $g/m^2$ in the sound insulation material (10) in the first or second aspect.

In a sound insulation material (10) for a vehicle in a fourth aspect of the present disclosure, with respect to the entire fibers, the fibers further include 20 wt. % or less of fibers C containing short fibers having a fineness of 1.2 to 5.0 dtex as a main component, and the fibers are a mixture including the fibers A, the fibers B, and the fibers C in the sound insulation material (10) of one of the first through third aspects.

In a sound insulation material (10) for a vehicle in a fifth aspect of the present disclosure, the sound insulation material (10) is a dash insulator, the air-permeability adjustment film (12) is provided only on a surface of the base material (11), and the air-permeability adjustment film (12) is located at a cabin side in the sound insulation material (10) in one of the first through fourth aspects.

A method for forming a sound insulation material (10) for a vehicle in a sixth aspect of the present disclosure is a method for forming the sound insulation material (10) of one of the first through third aspects, and includes: forming a sheet-shaped base material (11) of fibers by intertwining fibers A and fibers B with a fleece machine or a carding machine; holding and pressurizing at least a surface of the base material (11) to a predetermined thickness at a temperature of 100 to 240°C for a period of 0.5 to 10 seconds, thereby forming an air-permeability adjustment film (12); and heating and pressurizing the base material (11) to form the base material (11) into a predetermined shape.

A method for forming a sound insulation material (10) for a vehicle in a seventh aspect of the present disclosure is a method for forming the sound insulation material (10) of the fourth aspect, and includes: forming a sheet-shaped base material (11) of fibers by intertwining fibers A, fibers B, and fibers C with a fleece machine or a carding machine; holding and pressurizing at least a surface of the base material (11) to a predetermined thickness at a temperature of 100 to 240°C for a period of 0.5 to 10 seconds, thereby forming an air-permeability adjustment film (12); and heating and pressurizing the base material (11) to form the base material (11) into a predetermined shape.

With the structure of the sound insulation material of the first aspect, both sound absorption performance and sound insulation performance are improved, and weight reduction is achieved. In particular, since the air-permeability adjustment film is obtained by processing part of the base material, the air-permeability adjustment film is made of the same material as that for the base material, and can be easily obtained without any problems in bonding the air-permeability adjustment film and the base material. In addition, conditions (e.g., the thickness and the fabric weight) for forming of the air-permeability adjustment film can be easily adjusted.

With the structure of the sound insulation material of the second aspect, the fabric weight of the air-permeability adjustment film is within a specific range, and thus, sound absorption performance and sound insulation performance can be well balanced.

With the structure of the sound insulation material of the third aspect, the fabric weight of the sound insulation material is within a specific range, and thus, sound absorption performance can be improved.

With the structure of the sound insulation material of the fourth aspect, high recyclability and cost reduction can be achieved.

With the structure of the sound insulation material of the fifth aspect, a lightweight dash insulator with improved sound absorption performance and improved sound insulation performance can be obtained.

The method for forming a sound insulation material of the sixth or seventh aspect can provide a lightweight sound insulation material with improved sound absorption performance and improved sound insulation performance. In particular, since an air-permeability adjustment film can be obtained by heating and pressurizing a surface of a base material, the air-permeability adjustment film can be made of the same material as that for the base material, and can be easily obtained without problems in bonding the air-permeability adjustment film and the base material. In addition, the thickness and fabric weight of the air-permeability adjustment film can be easily adjusted. Accordingly, the air-permeability adjustment film can have a high degree of freedom of design.

BRIEF DESCRIPTION OF THE DRAWINGS

FIGS. 1A and 1B are cross-sectional views schematically illustrating sound insulation materials according to an embodiment of the present disclosure.
FIG. 2 is a graph showing pipe-method sound absorption coefficients in examples of the present disclosure and comparative examples.
FIG. 3 is a graph showing pipe-method transmission losses in the examples of the present disclosure and the comparative examples.
FIG. 4 is a graph showing relationships between air-permeability resistance and fabric weight in the examples of the present disclosure and the comparative examples.
FIG. 5 is an illustration of a device for measuring an air-permeability resistance.

DETAILED DESCRIPTION

An embodiment of the present disclosure will be specifically described hereinafter with reference to the drawings. The following embodiment is merely a preferred example in nature, and is not intended to limit the scope, applications, and use of the invention.

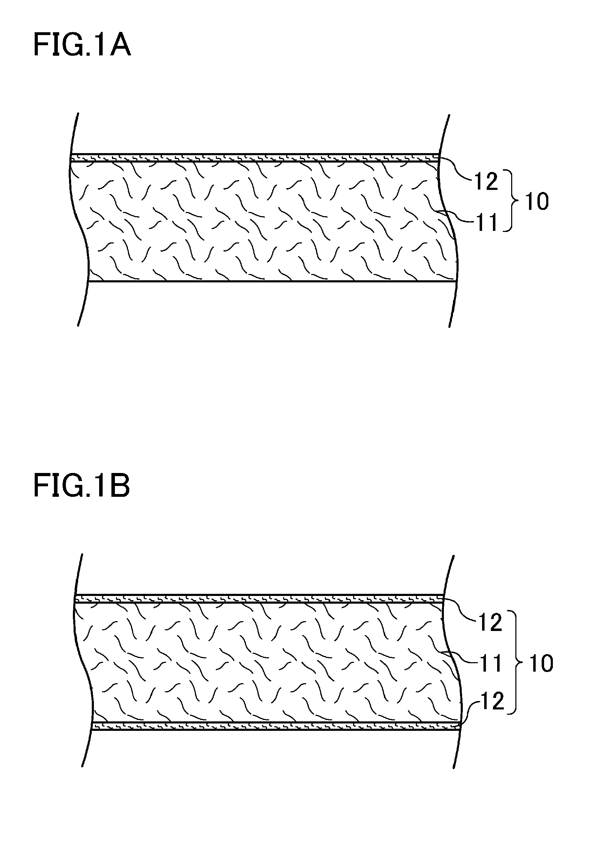

FIGS. 1A and 1B are cross-sectional views schematically illustrating sound insulation materials according to an embodiment of the present disclosure. FIG. 1A shows a sound insulation material 10 provided with an air-permeability adjustment film 12 at one surface of the sound insulation material 10, and a base material 11 is exposed at another surface of the sound insulation material 10. FIG. 1B shows another example of the sound insulation material 10 provided with the air-permeability adjustment film 12 at each surface of the sound insulation material 10.

In the sound insulation material of this embodiment, a nonwoven fabric including microfibers is not overlaid with another film material, and the nonwoven fabric including microfibers itself has a two-layer structure including a film material, thereby improving both sound absorption performance and sound insulation performance and achieving weight reduction.

First, fibers according to an embodiment of the present disclosure will be described.

(Microfibers)

Examples of microfibers useful for a sound insulation material include polyester fibers and polyethylene terephthalate (PET) fibers. The use of a nonwoven fabric (fibers) including microfibers as a main component in the sound insulation material can increase impedance (air-permeability resistance) in the sound insulation material, thus considerably enhancing energy attenuation in the sound insulation material. Accordingly, sound insulation can be provided without degradation of sound absorption performance.

The content of the microfibers in the nonwoven fabric is preferably in the range from 40 to 75 weight % (wt. %) of the entire nonwoven fabric. This is because of the following reasons. If the content of the microfibers is excessively small, sound absorption performance degrades in some cases. On the other hand, if the content of the microfibers is excessively large, the amount of thermal adhesive fibers relatively decreases, resulting in that formability degrades in some cases.

The microfibers preferably have a fineness of 0.1 to 1.0 dtex (decitex). This is because of the following reasons. With a low fineness, fibers themselves are slender, and thus, high air-permeability resistance and excellent sound absorption performance are achieved. However, in this case, handling thereof is not easy, and productivity degrades. On the other hand, with a high fineness, fibers themselves are thick, and thus, air-permeability resistance decreases, and sound absorption performance degrades in some cases.

(Thermal Adhesive Fiber)

A resin for thermal adhesive fibers used in the sound insulation material is not specifically limited as long as the thermal adhesive fibers are welded to bond microfibers when heated. Preferably, the resin is not completely welded, and remains partially, e.g., an inner portion of the resin remains, when heated, so that heat contraction is reduced. For example, a preferred core-sheath structure includes a core material of polyester fibers and a sheath material of polyethylene (PE), polypropylene (PP), and polyethylene terephthalate (PET). In particular, the same material as that for microfibers is preferably used because of high bondability and high recyclability.

The content of thermal adhesive fibers in the nonwoven fabric is preferably in the range from 15 to 60 wt. %, and more preferably in the range from 25 to 55 wt. %, of the entire nonwoven fabric. This is because of the following reasons. If the content of thermal adhesive fibers is excessively small, binder function cannot be exhibited and formability deteriorates in some cases. On the other hand, if the content of thermal adhesive fibers is excessively large, the amount of microfibers is relatively small.

The thermal adhesive fibers preferably have a fineness of 1.2 to 5.0 dtex. This is because of the following reasons. If the fineness of the thermal adhesive fibers is low, the product has a low rigidity, and handling of the product is difficult in some cases. On the other hand, if the fineness is high, clearance among fibers is large, and the sound absorption performance degrades in some cases.

(Short Fibers to Be Mixed)

The present disclosure is not limited to a combination of microfibers and thermal adhesive fibers. Short fibers similar to the thermal adhesive fibers may be additionally combined as long as functions of the microfibers and the thermal adhesive fibers are not inhibited. In terms of recyclability and cost reduction, short fibers are preferably additionally mixed. In particular, the same material as that for the microfibers or the thermal adhesive fibers is preferably employed in terms of bondability and recyclability.

The content of short fibers in the nonwoven fabric is preferably 20 wt. % or less of the entire nonwoven fabric. This is because an excessively large amount of short fibers degrades the original function of the sound insulation material in some cases. For this reason, short fibers are not mixed at all, or in the case of adding short fibers, the content of the short fibers is 20 wt. % or less (i.e., in the range from 0 to 20 wt. %) of the entire nonwoven fabric.

The short fibers preferably have a fineness of 1.2 to 5.0 dtex, as the thermal adhesive fibers.

(Air-permeability Adjustment Film)

In this embodiment, a nonwoven fabric obtained by mixing microfibers and thermal adhesive fibers (or mixing microfibers, thermal adhesive fibers, and short fibers) is employed, and the surface of this nonwoven fabric is heated and pressurized, thereby forming a high-density air-permeability adjustment film. Accordingly, unlike the techniques described above, in the air-permeability adjustment film of the embodiment, it is unnecessary to bond a nonwoven fabric using microfibers and another film material. Therefore, adhesion to the nonwoven fabric as the base material does not need to be taken into consideration. As a result, the air-permeability adjustment film can be easily formed as an integrated member with the nonwoven fabric of the base material. In particular, the thickness and air permeability of the air-permeability adjustment film can be adjusted by controlling the heating temperature, heating time, pressurization pressure, and pressurization clearance, for example, thus easily adjusting properties according to, for example, applications thereof.

The air-permeability adjustment film preferably has a thickness of 0.05 to 0.5 mm, and more preferably has a thickness of 0.1 to 0.35 mm. This is because of the following reasons. If the thickness of the air-permeability adjustment film is excessively large, the extensibility degrades to cause degradation in formability in some cases. On the other hand, if the thickness of the air-permeability adjustment film is excessively small, sound insulation performance cannot be exhibited in some cases.

The air-permeability adjustment film preferably has a fabric weight of 50 to 200 g/m$^2$. This is because of the following reasons. If the fabric weight is excessively small, only poor sound insulation performance can be obtained. On the other hand, if the fabric weight is excessively large, extensibility degrades to cause degradation in formability in some cases.

The air-permeability adjustment film of this embodiment is obtained by heating and compressing the base material, and is made of the same material as that for the base material. The air-permeability adjustment film has the function of adjusting air-permeability resistance of the entire sound insulation material, and is provided to improve, and obtain a balance between, sound absorption performance and sound insulation performance of the sound insulation material. Accordingly, although the air-permeability adjustment film is made of the same material as that for the base material, the name of "air-permeability adjustment film" is used herein in order to clarify the difference between the air-permeability adjustment film and the base material.

(Base Material)

The base material is made of a nonwoven fabric obtained by mixing microfibers and thermal adhesive fibers (or mixing microfibers, thermal adhesive fibers, and short fibers).

The base material on which the air-permeability adjustment film is formed (i.e., the sound insulation material) preferably has a fabric weight of 800 to 2400 g/m$^2$. This is because of the following reasons. If the fabric weight is excessively small, the microfibers cannot exhibit properties such as sound absorption performance, shielding performance, and filter function of the microfibers. If the fabric weight is excessively large, bondability to binder fibers degrades in some cases.

In this embodiment, the air-permeability adjustment film is formed by heating and compressing the base material. Thus, the boundary between the base material and the air-permeability adjustment film is not necessarily clear. However, part of the sound insulation material remaining as the original base material except for the air-permeability adjustment film is herein referred to as the base material.

The total thickness of the sound insulation material including the base material and the air-permeability adjustment film is preferably in the range from 5 to 60 mm, and more preferably in the range from 10 to 40 mm. This is because of the following reasons. If the thickness of the sound insulation material is excessively small, sound absorption performance and sound insulation performance degrade in some cases. On the other hand, if the thickness of the sound insulation material is excessively large, sound absorption performance and sound insulation performance are improved, but the weight thereof increases, resulting in a failure in weight reduction in some cases.

The sound insulation material preferably has an air-permeability resistance of 400 to 3500 Ns/m$^3$. This is because of the following reasons. If the air-permeability resistance is excessively high, sound absorption performance degrades in some cases. On the other hand, if the air-permeability resistance is excessively low, the sound insulation performance degrades in some cases. Although the sound insulation material preferably has a fabric weight of 800 to 2400 g/m$^2$ as described above, the range of the fabric weight is preferably set in such a manner that the allowable range of the air-permeability resistance shifts to larger values as the fabric weight increases. Specifically, when the fabric weight is small, unless the allowable range of the air-permeability resistance is not the range of small values, sound absorption performance immediately degrades to be insufficient. Thus, when the fabric weight is small, the allowable range of the air-permeability resistance is the range of small values. On the other hand, when the fabric weight is large, unless the allowable range of the air-permeability resistance is not the range of large values, the sound insulation performance degrades to be insufficient. Thus, when the fabric weight is large, the air-permeability resistance is the range of large values. In particular, since the air-permeability adjustment film is made of the same material (i.e., the material including microfibers) as that for the base material in this embodiment, the above-described tendency (i.e., the correlation between the air-permeability resistance and the fabric weight) is expected to be significant.

In the foregoing description, the air-permeability adjustment film is provided at one surface of the sound insulation material. Alternatively, the air-permeability adjustment film may be provided at each surface of the sound insulation material. Sound insulation materials each provided with an air-permeability adjustment film at one or each surface thereof may be laminated to face the same direction or opposed directions.

The structure in which the air-permeability adjustment films are provided at both surfaces of the sound insulation material can obtain advantages such as easiness in obtaining a base material showing a small variation in sound insulation performance in a case where sound absorption performance and sound insulation performance are to be improved in a specific frequency range and resistance to attachment of dust and dirt. A structure of the surface of the sound insulation material covered with a film is more advantageous than a structure of the surface at which a microfiber layer welded with thermal adhesive fibers is exposed because of easiness in handling the surface. The air-permeability adjustment film to be provided on another surface is not necessarily the same as the film provided on the other surface, and may be a film such as a very thin protection film, according to applications and purposes.

The sound insulation material of this embodiment is used as a dash insulator for automobiles, for example. In this case, for example, an air-permeability adjustment film is provided only on one surface of a base material, and this air-permeability adjustment film is placed at a cabin side in application.

Next, a method for forming a sound insulation material according to this embodiment will be described.

Microfibers and thermal adhesive fibers (or microfibers, thermal adhesive fibers, and short fibers) are laminated and stirred, and are intertwined with a fleece machine or a carding machine, thereby forming a sheet-shaped base material of fibers. This base material is heated in a heating furnace, and then is compression molded while being cooled with a press die in the shape of a product. In this manner, a sound insulation material is obtained. After formation of the base material, an air-permeability adjustment film is formed by heating and pressurizing the surface of the base material. Specifically, the air-permeability adjustment film is formed by (1) forming a plate-shaped base material not provided with an air-permeability adjustment film, and then holding and pressurizing one surface of the plate-shaped base material with a press die to a predetermined thickness at a predetermined heating temperature for a predetermined time before heating in a heating furnace for forming a sound insulation material. Alternatively, the air-permeability adjustment film may be formed by (2) forming a plate-shaped base material not provided with an air-permeability adjustment film, and then passing the plate-shaped base material between a pair of rollers one of which is heated before heating in a heating furnace for forming a sound insulation material. Alternatively, the air-permeability adjustment film may be formed by (3) forming a plate-shaped base material not provided with an air-permeability adjustment film, heating one surface of the plate-shaped base material, and then forming the base material between a pair of rollers into a plate shape before heating in a heating furnace for forming a sound insulation material.

Microfibers and thermal adhesive fibers (or microfibers, thermal adhesive fibers, and short fibers) are not necessarily laminated and stirred together at a time. Alternatively, a process in which thermal adhesive fibers (or thermal adhesive fibers and short fibers) are laminated and stirred first to be formed into a plate shape with a fleece machine, and then this plate-shaped material is overlaid with microfibers formed by a meltblow technique may be employed. In this case, a process using a base material overlaid with microfibers or a process using a base material before being overlaid with microfibers formed by a meltblow technique may be employed. Alternatively, in compression using a press die or a pair of rollers, a process of heating before compression with a press die or a pair of rollers as well as the process of heating with a press die or a pair of rollers may be employed.

In the foregoing embodiment, the air-permeability adjustment film is provided only at one surface of the sound insulation material. Alternatively, air-permeability adjustment films may be provided at both surfaces of the sound insulation material. In this case, the same advantages as those in the embodiment can be obtained. Specifically, in the same manner as the case where the air-permeability adjustment film is provided only at one surface of the sound insulation material, the other surface of the sound insulation material is subjected to heating and pressurization, thereby forming an air-permeability adjustment film at the other surface of the sound insulation material.

Then, conditions for forming a sound insulation material will be described.

(Conditions for Forming Base Material)

A method and conditions for forming a base material according to the present disclosure are substantially the same as those for general method and general conditions for forming a base material, and thus, are not described here in detail. Conditions for laminating and stirring microfibers and thermal adhesive fibers (or microfibers, thermal adhesive fibers, and short fibers) together at a time are also substantially the same as those in a general method for forming a base material, thus, are not described here in detail.

(Conditions for Forming Air-permeability Adjustment Film)

In forming the air-permeability adjustment film, the heating temperature is preferably in the range from 100 to 240°C. This is because of the following reasons. With an excessively low heating temperature, it is difficult to obtain a desired air-permeability adjustment film in some cases. On the other hand, with an excessively high heating temperature, the air-permeability adjustment film is thick, resulting in that extensibility degradation occurs to cause insufficient formability in some cases. In the case of using a hot press machine, the heating temperature is preferably in the range from 100 to 240°C. However, in the case of passing the base material between a pair of rollers one of which is heated without using a hot press machine, the process time is short, and thus, the heating temperature is allowed to be set at relatively high.

The heating time in forming the air-permeability adjustment film is preferably in the range from 0.5 to 10 seconds. This is because of the following reasons. If the heating time is excessively short, it is difficult to obtain a desired air-permeability adjustment film in some cases. On the other hand, if the heating time is excessively long, the air-permeability adjustment film is thick, resulting in that extensibility degradation occurs to cause insufficient formability in some cases.

(Conditions for Forming Sound Insulation Material)

To form a plate-shaped sound insulation material into a predetermined shape, the sound insulation material is heated in, for example, a heating furnace to be ready to be easily formed (deformed), and the heated sound insulation material is placed in a press die having a predetermined shape and subjected to pressurization. In this case, to maintain the shape of the sound insulation material formed into the predetermined shape with the press die, the sound insulation material is preferably cooled as soon as possible. Accordingly, a cooling air may be supplied from the surface of the press die such that the heated sound insulation material is formed while being cooled. The heating temperature in forming the sound insulation material only needs to be set at a level at which the plate-shaped sound insulation material is ready to be easily formed, and needs to be higher than the melting point of thermal adhesive fibers. Thus, the heating temperature in forming the sound insulation material does not need to be very high, and is in the range from 150 to 180°C, for example.

The heating time for forming the sound insulation material only needs to be set at a period in which the plate-shaped sound insulation material becomes ready to be easily formed, and preferably in the range from 15 to 60 seconds, for example.

The clearance of the mold is appropriately selected according to the thickness of the base material, fibers of the nonwoven fabric, and applications, and a practical range of the clearance is about 0.5 to 5 mm.

[Examples]

Examples actually conducted will be specifically described.

(FIRST EXAMPLE)

First, 75 wt. % of microfibers A of PET fibers having a fineness of 0.6 dtex and 25 wt. % of thermal adhesive fibers B of PET fibers having a fineness of 2.2 dtex were mixed and stirred, and intertwined with a fleece machine, thereby forming a sheet-shaped base material having a thickness of 30 mm and a fabric weight of 1400 g/m$^2$. Then, one surface of the sheet-shaped base material was subjected to pressurization with a press die (heating temperature: about 150°C, heating time: 5 sec.), thereby forming an air-permeability adjustment film. Thereafter, the base material provided with the air-permeability adjustment film was heated in a heating furnace (heating temperature: about 165°C, heating time: 40 sec.), and then placed in a press die to be formed into a predetermined shape, thereby forming a sound insulation material. The resultant sound insulation material had the following properties:

Thickness of the sound insulation material: 25 mm
Thickness of the air-permeability adjustment film: 0.2 mm
Fabric weight of the air-permeability adjustment film: 100 g/m$^2$

(SECOND EXAMPLE)

A sound insulation material was formed in the same manner as in the first example except that 65 wt. % of microfibers A and 35 wt. % of thermal adhesive fibers B were used.

(THIRD EXAMPLE)

A sound insulation material was formed in the same manner as in the first example except that 55 wt. % of microfibers A and 45 wt. % of thermal adhesive fibers B were used.

(FOURTH EXAMPLE)

A sound insulation material was formed in the same manner as in the first example except that 40 wt. % of microfibers A and 60 wt. % of thermal adhesive fibers B were used.

(FIFTH EXAMPLE)

A sound insulation material was formed in the same manner as in the second example except that 15 wt. % of thermal adhesive fibers B and 20 wt. % of short fibers C of PET fibers having a fineness of 2.2 dtex were used, and microfibers A, the thermal adhesive fibers B, and the short fibers C were mixed and stirred to form a sheet-shaped base material.

(SIXTH EXAMPLE)

A sound insulation material was formed in the same manner as in the second example except that 20 wt. % of thermal adhesive fibers B and 15 wt. % of short fibers C of PET fibers having a fineness of 4.4 dtex were used, and microfibers A, the thermal adhesive fibers B, and the short fibers C were mixed and stirred to form a sheet-shaped base material.

(SEVENTH EXAMPLE)

A sound insulation material was formed in the same manner as in the second example except that PET fibers having a fineness of 0.9 dtex were used as microfibers A and PET fibers having a fineness of 4.4 dtex were used as thermal adhesive fibers B.

(FIRST COMPARATIVE EXAMPLE)

A sound insulation material was formed in the same manner as in the second example except that 35 wt. % of microfibers A, 45 wt. % of thermal adhesive fibers B, and 20 wt. % of short fibers C of PET fibers having a fineness of 2.2 dtex were used, and the microfibers A, the thermal adhesive fibers B, and the short fibers C were mixed and stirred to form a sheet-shaped base material.

(SECOND COMPARATIVE EXAMPLE)

A sound insulation material was formed in the same manner as in the above first comparative example except that 15 wt. % of microfibers A and 65 wt. % of thermal adhesive fibers B were used.

(THIRD COMPARATIVE EXAMPLE)

As an example of a conventional technique, a sound insulation material in which a soft PVC is adhered to a nonwoven fabric of coarse hair felt (e.g., a felt material obtained by unwinding wasted cloth or other materials into a felt form, and made of, for example, cotton, synthetic fibers, and wool) was prepared.

Nonwoven fabric

Fineness: 2 to 7 dtex, thickness: 25 mm, fabric weight: 1250 $g/m^2$

Soft PVC

Thickness: 2 mm, fabric weight: 3400 $g/m^2$

Pipe-method sound absorption coefficients, pipe-method transmission losses, air-permeability resistances in the first through seventh examples and the first through third comparative examples were evaluated.

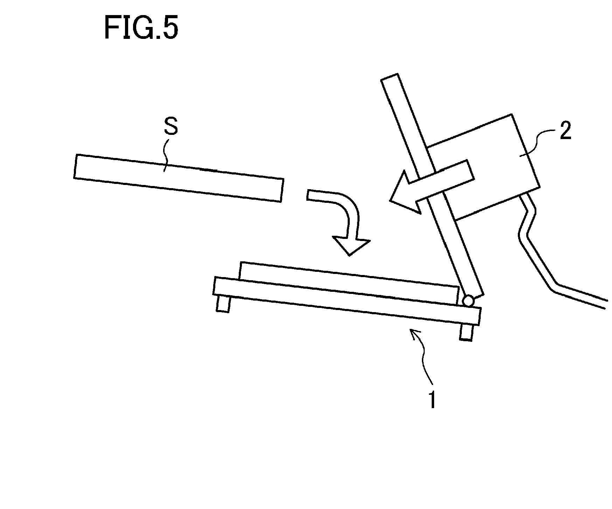

The pipe-method sound absorption coefficients were obtained by a normal-incidence absorption coefficient evaluation based on ISO10534-2, JIS A1405-2, and ASTM E1050. The pipe-method transmission losses were obtained by a normal-incidence transmission loss evaluation based on ASTM E2611. The air-permeability resistances were obtained with a measurement jig illustrated in FIG. 5.

(Method for Measuring Air-permeability Resistance)

A sample of each example is shaped to a size of 300 mm $\times$ 300 mm, and the fabric weight of this sample is measured with a usual method. This sample S is placed in a measurement jig 1 illustrated in FIG. 5, and air permeability of the sample S is measured with the sample S pressed until the thickness thereof reaches 15 mm. Specifically, a suction part 2 having a diameter of 180 mm is used to suck the sample S at a suction speed of 25 liters/min. Then, the air flow ratio (AFR) is obtained as an air-permeability resistance by:

$$AFR = \Delta p/\text{suction speed}$$

where $\Delta p$ = original pressure - pressure upon suction

Table 1 shows results of measurements on pipe-method sound absorption coefficients and pipe-method transmission losses in the examples and the comparative examples.

[Table 1]

| | COMPOSITION OF FIBERS (wt. %) | | | EVALUATION METHOD | |
|---|---|---|---|---|---|
| | FIBERS A | FIBERS B | FIBERS C | 1 | 2 |
| FINENESS | 0.6dtex | 2.2dtex | | PIPE-METHOD SOUND ABSORPTION COEFFICIENT | PIPE-METHOD TRANSMISSION LOSS |
| MATERIAL | PET | PET | | | |
| EXAMPLE 1 | 75 | 25 | | 0.88 | 14.1 |
| EXAMPLE 2 | 65 | 35 | | 0.85 | 13.1 |
| EXAMPLE 3 | 55 | 45 | | 0.84 | 12.3 |
| EXAMPLE 4 | 40 | 60 | | 0.82 | 11.8 |
| EXAMPLE 5 | 65 | 15 | 20(2.2dtex) | 0.84 | 13.1 |
| EXAMPLE 6 | 65 | 20 | 15(4.4dtex) | 0.83 | 13.1 |
| EXAMPLE 7 | 65 | 35 | | 0.84 | 13.1 |
| COMPARATIVE EXAMPLE 1 | 35 | 45 | 20(2.2dtex) | 0.72 | 8.9 |
| COMPARATIVE EXAMPLE 2 | 15 | 65 | 20(2.2dtex) | 0.68 | 7.2 |
| COMPARATIVE EXAMPLE 3 | NONWOVEN FABRIC | SOFT PVC | | 0.2 | 18.5 |
| BOTH PIPE-METHOD SOUND ABSORPTION COEFFICIENT AND PIPE-METHOD TRANSMISSION LOSS SHOW AVERAGE VALUES OF 500 TO 5 kHz. | | | | | |

It is required for an interior material for a vehicle to have a pipe-method sound absorption coefficient of 0.8 or more and a pipe-method transmission loss of 11dB or more for sound absorption performance and sound insulation performance. As shown in Table 1, in the examples of the present disclosure, the pipe-method sound absorption coefficients are 0.8 or more, and the pipe-method transmission losses are 11dB or more, and good values are obtained in every example. On the other hand, in the first and second comparative examples, the pipe-method sound absorption coefficients are 0.72 and 0.68, respectively. These results show that the values are at certain levels, but are not satisfactory as sound absorption coefficients in these comparative examples. With respect to the pipe-method transmission losses, the first comparative example shows 8.9, and the second comparative example shows 7.2. These results show that sound insulation performance is insufficient in these comparative examples.

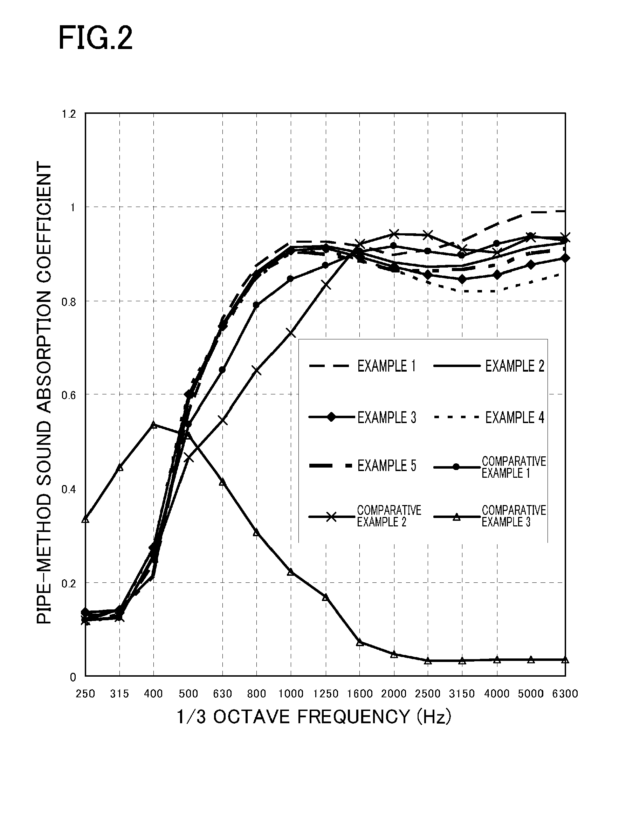

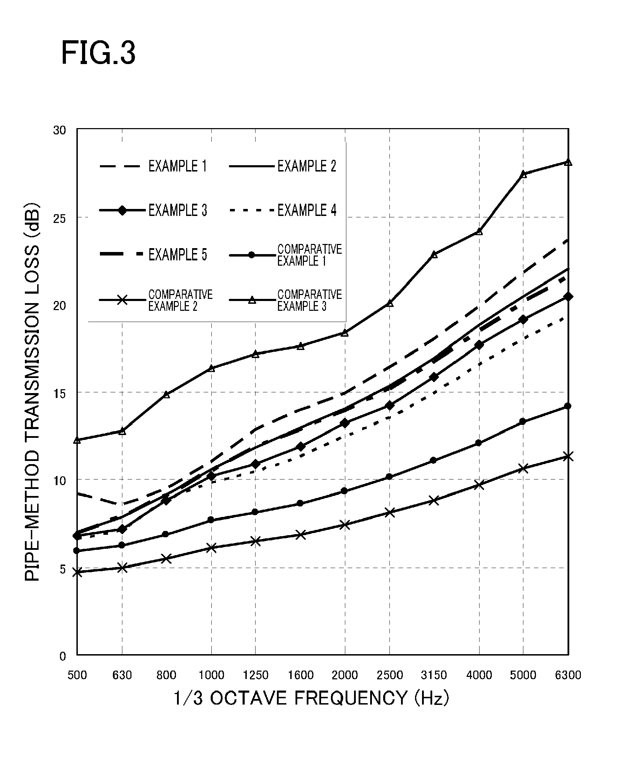

FIGS. 2 and 3 show changes in frequency with respect to the pipe-method sound absorption coefficient and the pipe-method transmission loss of a sound insulation material in each of first through fifth examples and the first through third comparative examples. As shown in FIG. 2, in the third comparative example, the absorption coefficient is low in the range from 500 to 6300 Hz. In the first and second comparative examples, the absorption coefficients are at the same level as those of the examples of the present disclosure in some frequency ranges, but are low in some frequency ranges, and thus, are not stable.

In addition, as shown in FIG. 3, the third comparative example shows a considerably excellent value for sound insulation performance, but the first and second comparative examples show poor values, and thus, are inferior in sound insulation performance.

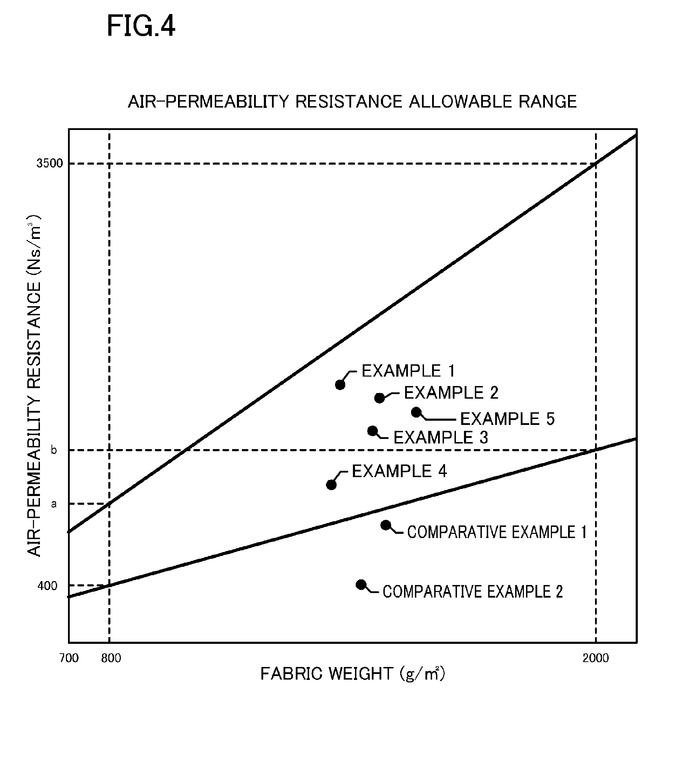

FIG. 4 is a graph showing relationships between air-permeability resistance and fabric weight in the first through fifth examples and first and second comparative examples. The relationship between the air-permeability resistance and the fabric weight in FIG. 4 shows that the first through fifth examples are within the range satisfying both sound absorption performance and sound insulation performance, but the first and second comparative examples have low air-permeability resistances relative to a predetermined fabric weight, and thus, are inferior in sound insulation performance. The third comparative example has a considerably high air-permeability resistance, and although not shown in the graph, can be concluded to be superior in sound insulation performance.

In FIG. 4, the upper limit (a) of the air-permeability resistance at a fabric weight of 800 g/m$^2$ and the lower limit (b) of the air-permeability resistance at a fabric weight of 2000 g/m$^2$ are not shown as quantitative values because the air-permeability resistance varies depending on, for example, the qualities, finenesses, and thicknesses of microfibers and thermal adhesive fibers. The relationship between the upper limit (a) and the lower limit (b) is expressed as: upper limit (a) - 400 < 3500 - lower limit (b). That is, as the fabric weight increases, the allowable range of the air-permeability resistance increases. In particular, since the air-permeability adjustment film is made of the same material (i.e., a material including microfibers) as that for the base material, and are simply heated and pressurized in the present disclosure, it can be concluded that the air-permeability resistance is in the allowable range as shown in FIG. 4.

The present disclosure can provide a vehicle interior member requiring weight reduction, and is advantageously applicable to interior materials requiring both improved sound absorption performance and improved sound insulation performance as well as weight reduction, such as dash insulators and sound absorbers for floor mats or door trims. Thus, the present disclosure is very useful, and has high industrial applicability.

**Claims**

1. A sound insulation material (10) for a vehicle, the sound insulation material (10) comprising:

   a base material (11) of fibers including microfibers; and
   an air-permeability adjustment film (12) obtained by heating and compressing at least a surface of the base material (11), wherein
   with respect to the entire fibers, the fibers include 40 to 75 weight percent (wt. %) of fibers A containing microfibers having a fineness of 0.1 to 1.0 dtex as a main component and 15 to 60 wt. % of fibers B containing thermal adhesive fibers having a fineness of 1.2 to 5.0 dtex as a main component, and
   the fibers are a mixture including the fibers A and the fibers B.

2. The sound insulation material (10) of claim 1, wherein the air-permeability adjustment film (12) has a fabric weight of 50 to 200 g/m$^2$.

3. The sound insulation material (10) of claim 1 or 2, wherein the sound insulation material (10) has a fabric weight of 800 to 2400 g/m$^2$.

4. The sound insulation material (10) of one of claims 1-3, wherein with respect to the entire fibers, the fibers further include 20 wt. % or less of fibers C containing short fibers having a fineness of 1.2 to 5.0 dtex as a main component, and the fibers are a mixture including the fibers A, the fibers B, and the fibers C.

5. The sound insulation material (10) of one of claims 1-4, wherein the sound insulation material (10) is a dash insulator, the air-permeability adjustment film (12) is provided only on a surface of the base material (11), and the air-permeability adjustment film (12) is located at a cabin side.

6. A method for forming the sound insulation material (10) of one of claims 1-3, the method comprising:

   forming a sheet-shaped base material (11) of fibers by intertwining fibers A and fibers B with a fleece machine or a carding machine;
   holding and pressurizing at least a surface of the base material (11) to a predetermined thickness at a temperature of 100 to 240°C for a period of 0.5 to 10 seconds, thereby forming an air-permeability adjustment film (12); and
   heating and pressurizing the base material (11) to form the base material (11) into a predetermined shape.

7. A method for forming the sound insulation material (10) of claim 4, the method comprising:

   forming a sheet-shaped base material (11) of fibers by intertwining fibers A, fibers B, and fibers C with a fleece machine or a carding machine;
   holding and pressurizing at least a surface of the base material (11) to a predetermined thickness at a temperature of 100 to 240°C for a period of 0.5 to 10 seconds, thereby forming an air-permeability adjustment film (12); and
   heating and pressurizing the base material (11) to form the base material (11) into a predetermined shape.

FIG.1A

FIG.1B

# FIG.2

# FIG.3

# FIG.4

AIR-PERMEABILITY RESISTANCE ALLOWABLE RANGE

FIG.5

Europäisches
Patentamt

European
Patent Office

Office européen
des brevets

# EUROPEAN SEARCH REPORT

**Application Number**

EP 11 19 0456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/032495 A2 (3M INNOVATIVE PROPERTIES CO [US]; TAKEDA SATOSHI [JP]) 12 March 2009 (2009-03-12)<br>* page 1, line 8 - line 16 *<br>* page 1, line 25 - page 2, line 3 *<br>* page 5, line 5 - line 17 *<br>* page 6, line 11 - line 19 *<br>* page 7, line 7 - line 20 *<br>* page 7, line 27 - page 8, line 5 *<br>* page 8, line 20 - page 9, line 15 *<br>* page 12, line 28 - page 13, line 2 *<br>* page 13, line 19 - page 14, line 13 *<br>* page 14, line 24 - line 28 *<br>* example 1 *<br><br>----- | 1-7 | INV.<br>D04H1/54<br>D04H1/541 |
| Y | US 5 841 081 A (THOMPSON DELTON R [US] ET AL) 24 November 1998 (1998-11-24)<br>* column 2, line 7 - line 24 *<br>* column 2, line 56 - column 3, line 23 *<br>* column 9, line 18 - column 10, line 19 *<br><br>----- | 1-7 | |
| A | WO 2009/042996 A1 (LYDALL INC [US]; BORCHARDT STEVEN [US]; JARRARD BRIAN [US]) 2 April 2009 (2009-04-02)<br>* paragraphs [0002], [0017], [0028], [0029] *<br><br>----- | 1-7 | **TECHNICAL FIELDS SEARCHED (IPC)**<br><br>D04H |

The present search report has been drawn up for all claims

| Place of search | Date of completion of the search | Examiner |
|---|---|---|
| The Hague | 13 March 2012 | Girard, Sarah |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 19 0456

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2012

| Patent document cited in search report | | Publication date | Patent family member(s) | | Publication date |
|---|---|---|---|---|---|
| WO 2009032495 | A2 | 12-03-2009 | JP | 2009057663 A | 19-03-2009 |
| | | | US | 2010203305 A1 | 12-08-2010 |
| | | | WO | 2009032495 A2 | 12-03-2009 |
| US 5841081 | A | 24-11-1998 | NONE | | |
| WO 2009042996 | A1 | 02-04-2009 | AU | 2008304132 A1 | 02-04-2009 |
| | | | CA | 2702236 A1 | 02-04-2009 |
| | | | CN | 101878132 A | 03-11-2010 |
| | | | EP | 2193050 A1 | 09-06-2010 |
| | | | JP | 2011502065 A | 20-01-2011 |
| | | | KR | 20100061572 A | 07-06-2010 |
| | | | US | 2009085378 A1 | 02-04-2009 |
| | | | WO | 2009042996 A1 | 02-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009287143 A
- JP 3705419 B
- JP 2008290642 A